Europäisches Patentamt

European Patent Office

Office européen des brevets

(19)

(11) Veröffentlichungsnummer : **0 022 586**
**B1**

(12)

# EUROPÄISCHE PATENTSCHRIFT

(45) Veröffentlichungstag der Patentschrift :
**15.12.82**

(21) Anmeldenummer : **80200491.1**

(22) Anmeldetag : **23.05.80**

(51) Int. Cl.³ : **B 23 F   9/02**

(54) Verfahren zum Balligschleifen von Zahnrädern mit längsgekrümmten Zähnen und Schleifkopf zur Durchführung des Verfahrens.

(30) Priorität : **12.07.79 CH 6503/79**

(43) Veröffentlichungstag der Anmeldung :
**21.01.81 (Patentblatt 81/03)**

(45) Bekanntmachung des Hinweises auf die Patenterteilung : **15.12.82 Patentblatt 82/50**

(84) Benannte Vertragsstaaten :
**CH DE FR GB IT LI**

(56) Entgegenhaltungen :
**DE A 1 752 775**
**US A 3 503 301**

(73) Patentinhaber : **Werkzeugmaschinenfabrik Oerli-kon-Bührle AG**
**Birchstrasse 155**
**CH-8050 Zürich (CH)**

(72) Erfinder : **Konersmann, Erhard, Dipl.-Ing.**
**Grundackerstrasse 3**
**CH-8304 Wallisellen (CH)**

Jouve, 18, rue St-Denis, 75001 Paris, France

# Verfahren zum Balligschleifen von Zahnrädern mit längsgekrümmten Zähnen und Schleifkopf zur Durchführung des Verfahrens

Die Erfindung betrifft ein Verfahren zum Balligschleifen von Zahnrädern mit längsgekrümmten Zähnen nach einem kontinuierlichen Verfahren, mit kegelstumpfförmigen, um ihre Achsen drehbaren, einzeln angetriebenen Schleifkörpern, welche in einem um eine Drehachse drehbaren Schleifkopf gelagert sind und beim Schleifen eine aussere sowie eine innere, zur Drehachse des Schleifkopfes koaxiale Hüllfläche bilden, sowie einen Schleifkopf zur Durchführung des Verfahrens.

Längsgekrümmte Zähne von Zahnrädern werden balliggeschliffen, um den Bereich der Zahnflanken, wo Berührung mit dem Zahn eines Gegenrades, sogenanntes Tragen, stattfindet, möglichst genau abzugrenzen. So kann beispielsweise einseitiges Tragen oder nur auf die Zahnenden beschränktes Tragen vermieden werden.

Aus der Schweizer Patentschrift Nr. 543 921 ist ein Verfahren zum Schleifen sowie Balligschleifen von Zahnrädern wie auch eine Vorrichtung zur Durchführung des Verfahrens gemäss dem Oberbegriff des Anspruches 1 bekannt. Das Schleifen der Innen- und Aussenflanken der Zähne erfolgt bei diesem Verfahren gleichzeitig in einem Arbeitsgang. Dazu weist ein Schleifkopf zwei Gruppen von kegelstumpfförmigen Schleifkörpern auf. Jede Gruppe ist auf einem, zur Drehachse des Schleifkopfes konzentrischen Kreis angeordnet. Zum Schleifen wird jeweils ein Zahn zwischen einem Paar, von einander zugeordneten Schleifkörpern — je einem aus jeder Gruppe — hindurch bewegt. Dabei drehen sich die Schleifkörper sowie der Schleifkopf um die eigene Achse.

Zum Balligschleifen sind die Schleifkörper in Richtung ihrer Achsen hin- und herbewegbar auf dem Schleifkopf gelagert. Diese Hin- und Herbewegung wird gesteuert, indem die Enden der Schleifkörper die dem zu schleifenden Zahnrad abgewandt sind, entlang ringförmigen Steuerscheiben geführt werden, die beim Drehen des Schleifkopfes diese Hin- und Herbewegung bewirken. D.h. die Zahnflanken werden an deren Enden näher bis an den Grund der Zahnlücke geschliffen, wodurch die kegelstumpfförmigen Schleifkörper auch senkrecht zu den Zahnflanken stärker abschleifen.

Bei diesem Verfahren und diesem Schleifkopf wird die Schleifgenauigkeit durch die nachfolgend erwähnten Nachteile beeinträchtigt.

Dadurch, dass die Enden der Schleifkörper auf der Steuerscheibe quer zu ihrer eigenen Achse gleiten, während der Drehung des Schleifkopfes, werden die Schleifkörper und vor allem deren zylindrischer Schaft in Schwingung versetzt. Dies weil sich die Lagerung der einzelnen Schleifkörper nicht so stabil ausführen lässt, wie es wünschbar ist, denn zwischen den einzelnen Schleifkörpern ist nur sehr wenig Raum dafür vorhanden.

Nach dem Abrichten der Schleifkörper muss der Abstand zwischen den Schleifkörpern eines Paares, sowie der Abstand des einzelnen Schleifkörpers von der Drehachse des Schleifkopfes wieder neu eingestellt werden. Da ein Schleifkopf eine ganze Anzahl solcher Paare von Schleifkörpern aufweist, muss eine entsprechende Anzahl von Einstellungen vorgenommen werden, was die Wahrscheinlichkeit von Fehleinstellungen erhöht.

Es ist ferner eine Maschine zum Schneiden von Zahnrädern aus der US-PS 3 440 927 bekannt, bei welcher die Innen- und die Aussenflanken der Zähne mit Messern geschnitten werden, die auf verschiedenen Radien auf einem Messerkopf angeordnet sind. Dabei werden die Innen- und die Aussenflanken in separaten Arbeitsgängen geschnitten, wobei die Drehachse des Messerkopfes in Abständen von den betreffenden Zahnflanken eingestellt wird, die dem Radius der Messer auf dem Messerkopf entsprechen.

Dieses Schneidverfahren ist aber nicht mit dem erfindungsgemässen Verfahren zum Balligschleifen vergleichbar, da es bei Kegelrädern dazu dient, die Verengung des Zahnes oder der Zahnlücke in deren Längsrichtung zu beeinflussen.

Die Erfindung, wie sie in den Ansprüchen gekennzeichnet ist, löst die Aufgabe, ein Verfahren zum Balligschleifen von Zahnrädern mit längsgekrümmten Zähnen sowie einen Schleifkopf zur Durchführung des Verfahrens zu schaffen, die mit grösserer Genauigkeit arbeiten und womit die Reproduzierbarkeit so erzeugter Zahnflanken erleichtert wird.

Die durch die Erfindung erreichten Vorteile sind im wesentlichen darin zu sehen, dass das Abrichten wesentlich vereinfacht wird, da die Schleifkörper zum Balligschleifen der Innen- und der Aussenflanken der Zähne in separaten Arbeitsgängen abgerichtet werden können, wobei dann anschliessend die betreffende Flanke geschliffen wird, bevor zum Schleifen der anderen Flanke wieder abgerichtet wird. Der Schleifkopf kann ferner so ausgelegt werden, dass er zum Balligschleifen von Zahnrädern in einem grossen Modulbereich verwendet werden kann.

Im folgenden wird die Erfindung anhand von Ausführungsbeispiele darstellenden Zeichnungen näher erläutert. Es zeigen :

Figur 1 einen erfindungsgemässen Schleifkopf in perspektivischer Darstellung ;

Figur 2 eine schematische Darstellung der geometrischen Verhältnisse bei der Durchführung des Verfahrens für eine Innenflanke eines Zahnes ;

Figur 3 eine schematische Darstellung entsprechend Fig. 2, aber für eine Aussenflanke eines Zahnes ;

Figur 4 eine Seitenansicht eines Messerkopfes.

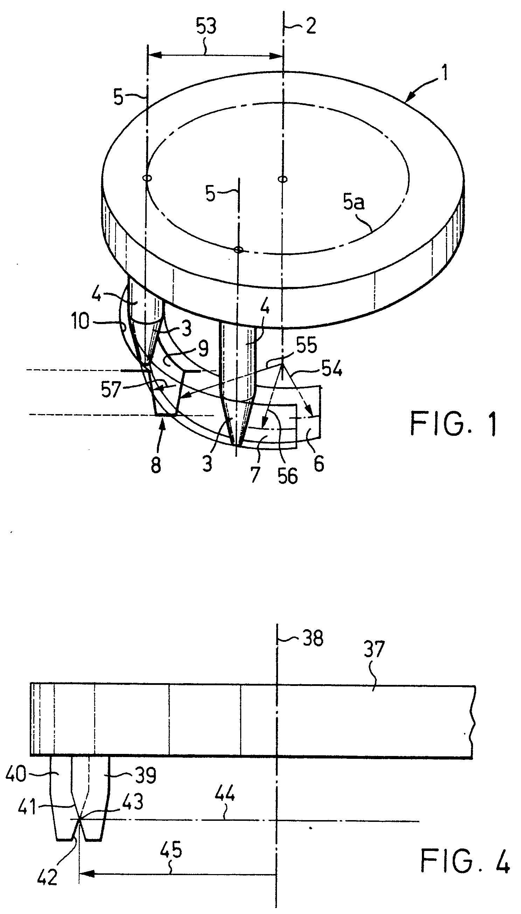

In Fig. 1 ist ein Schleifkopf 1 erkennbar. Dieser kann beispielsweise in nicht näher dargestellter, aber bekannter Weise in eine Werkzeugspindel einer Maschine eingesetzt werden, wie sie aus der Schweizer Patentschrift Nr. 543 921 bekannt ist. Darin ist er um eine Drehachse 2 drehbar gelagert. Im Schleifkopf 1 sind kegelstumpfförmige Schleifkörper 3 über deren zylindrischen Schaft 4 um ihre Achsen 5 drehbar gelagert. Die Schleifkörper 3 rotieren zum Schleifen mit hoher Drehzahl um ihre eigene Achse 5. Antrieb und Lagerung dieser Schleifkörper 3 ist an sich bekannt und ebenfalls in der Schweizer Patentschrift Nr. 543 921 beschrieben. Der Schleifkopf 1 weist mehrere Schleifkörper 3 auf, deren Achsen 5 auf einem Kreis 5a, welcher aus dieser Perspektive als Ellipse erscheint, angeordnet sind. Die Schleifenden, kegelstumpfförmigen Oberflächen der Schleifkörper 3 führen während ihrer Drehung um die Achsen 5 sowie um die Drehachse 2 Bewegungen aus, die durch eine innere Hüllfläche 6 sowie eine äussere Hüllfläche 7 eingehüllt werden.

Fig. 1 zeigt ferner eine Zahnlücke 8 mit einer Aussenflanke 9 eines angrenzenden Zahnes und einer Innenflanke 10 eines weiteren angrenzenden Zahnes. Die Bezeichnung Aussen- oder Innenflanke bezieht sich speziell auf längsgekrümmte Zähne, deren nach innen gekrümmte Flanken als Innenflanken und deren nach aussen gewölbte Flanken als Aussenflanken bezeichnet werden. In Fig. 1 ist ein Schleifkörper 3 gerade in der Stellung dargestellt, in welcher die Aussenflanke 9 geschliffen wird. Die Zahnlücke 8 kann, wie sie in Fig. 1 gezeichnet ist, sowohl als Zahnlücke eines Stirnzahnrades als auch als Zahnlücke eines Planrades aufgefasst werden.

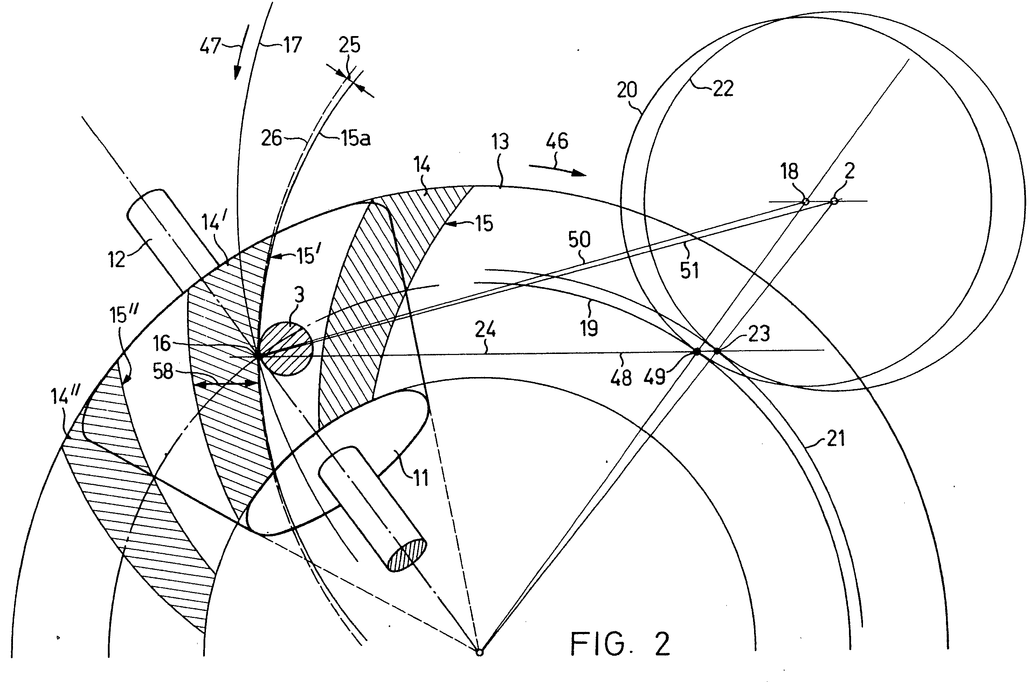

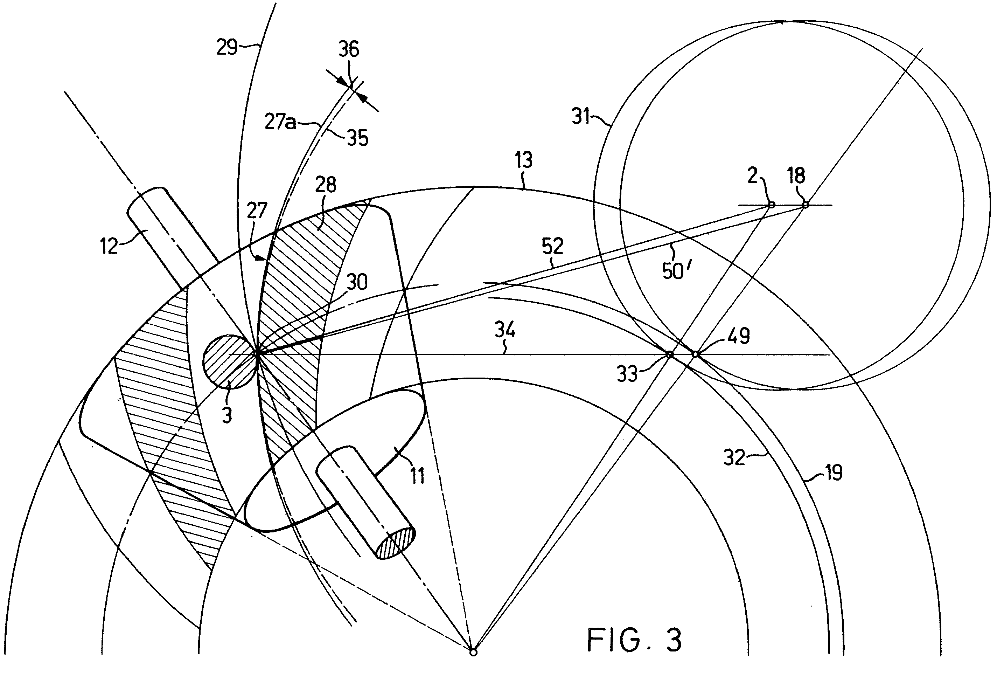

In Fig. 2 erkennt man ein Kegelrad 11, das auf einer Werkstückspindel 12 befestigt ist. Diese kann beispielsweise zu einer Maschine, wie sie in der bereits erwähnten Schweizer Patentschrift Nr. 543 921 beschrieben ist, gehören. Weiter erkennt man in Fig. 2 ein fiktives Planrad 13 mit Zähnen 14, 14', 14", die im Bereiche der Teilebene des Planrades 13 geschnitten dargestellt sind. Eine Zahnlängslinie 15a einer Innenflanke 15' des ungeschliffenen Zahnes 14' ist im Bereiche eines Berechnungspunktes 16 identisch mit der Zahnlängslinie des entsprechenden wirklichen Zahnes des Kegelrades 11. Da der wirkliche, längsgekrümmte Zahn des Kegelrades 11 dem Kegelmantel folgend nicht parallel zu einer Kegelmantellinie verläuft, stellen die Zähne 14, 14', 14" (auch in Fig. 3) in der Teilebene geschnittene, auf die Teilebene des fiktiven Planrades 13 projizierte Abwicklungen der wirklichen Zähne des Kegelrades 11 dar. Die Zähne (14, 14', 14", 28) des Planrades 13 sind in Fig. 2 und 3 gegenüber dem Durchmesser des Kegelrades 11 überdimensioniert gezeichnet. Ein Schleifkörper 3 ist hier ebenfalls in der Teilebene des Planrades 13 geschnitten dargestellt. Die Hüllfläche 7 gemäss Fig. 1 ist in Fig. 2 mit der Teilebene des Planrades 13 geschnitten und entspricht deshalb dem Kreisbogen 17.

Die Zähne 14, 14', 14" des Planrades 13 resp. des Kegelrades 11 sind in diesem Beispiel mit einem drehenden Messerkopf 37, siehe Fig. 4, nach einem kontinuierlichen Verfahren hergestellt. Eine Drehachse 38 dieses Messerkopfes 37 schneidet die Teilkreisebene des Planrades 13 in einem Zentrum 18. Entsprechend sind ein Grundkreis 19 und ein Rollkreis 20, die sich in einem Punkt 49 berühren, beim Schneiden der Zähne 14, 14', 14" von Bedeutung. Da beim Balligschleifen der Schleifkopf 1 um die Drehachse 2 dreht, ist dann entsprechend ein Grundkreis 21 sowie ein Rollkreis 22 von Bedeutung. Grundkreis 21 und Rollkreis 22 berühren sich in einem Punkt 23. Zwischen diesem und dem Berechnungspunkt 16 liegt ein momentaner Krümmungsradius 24 einer balligen Längslinie 26. Eine Längsballigkeit 25, d.h. das Mass, um welches die ursprüngliche Zahnlängslinie 15a an den Enden des Zahnes 14' von der balligen Längslinie 26 abweicht, ist sehr gering, verglichen mit einer Breite 58 des Zahnes 14'. Die Längslinien 15a und 26 sind deshalb in Fig. 2 etwas weiter nach aussen gezogen, um die Längsballigkeit 25 sichtbar zu machen.

Fig. 3 zeigt eine Anordnung analog Fig. 2, wobei aber der Schleifkörper 3 eine Aussenflanke 27, hier im Schnitt mit der Teilebene des Planrades 13 als Längslinie 27a eines Zahnes 28 ersichtlich, schleifen soll. Die innere Hüllfläche 6 gemäss Fig. 1, geschnitten mit der Teilebene des Planrades 13 ist als Kreisbogen 29 dargestellt, der die Längslinie 27a in einem Berechnungspunkt 30 der Aussenflanke 27 schneidet. Die Drehachse 2 ist Zentrum eines Rollkreises 31, der einen Grundkreis 32 in einem Punkte 33 berührt. Ein momentaner Krümmungsradius 34 einer balligen Längslinie 35 der balligen Zahnflanke 27 erstreckt sich zwischen dem Punkt 33 und dem Berechnungspunkt 30. Eine Längsballigkeit 36 tritt hier zwischen den Längslinien 27a und 35 auf.

Fig. 4 zeigt einen Messerkopf 37, wie er beispielsweise zum Herstellen der Zähne des Kegelrades 11 nach einem kontinuierlichen Verfahren verwendet wird. Seine Drehachse 38, sowie ein Innenschneider 39 und ein Aussenschneider 40 sind daraus ersichtlich. Schneidkanten 41, 42 sind in an sich bekannter Weise so gerichtet, dass sie im Schnittpunkt 43 mit einer Teilebene 44 je einen gleichen Radius 45 aufweisen.

Wirkungsweise

Anhand von Fig. 1 sei nun erläutert, wie die Innen- und Aussenflanken 10, 9 der Zähne eines Zahnrades mit einem Einzelteilverfahren balliggeschliffen werden. Dabei werden beispielsweise zuerst alle Aussenflanken 9, später alle Innenflanken 10 balliggeschliffen.

Zum Balligschleifen der Aussenflanken 9 wird ein Schleifkopf 1 verwendet, dessen innere Hüllfläche 6 einen geringfügig kleineren Krümmungsradius 54 aufweist als der Krümmungsradius 55 der ungeschliffenen Aussenflanke 9. Die relative Lage von Schleifkopf 1 und Aussenflanke 9 wird eingestellt, indem die Drehachse 2 des Schleifkopfes 1 in eine Stellung gebracht wird, in der sie sich in je gleicher Entfernung von den beiden Enden der Aussenflanke 9 befindet und dabei ein Schleifkörper 3 die Mitte der Aussenflanke 9 berühren kann. Um weitere Aussenflanken 9 zu schleifen, muss dann das Zahnrad jeweils nur um eine Zahnteilung weiter gedreht werden, so dass eine ungeschliffene Aussenflanke 9 an die Stelle der balliggeschliffenen Aussenflanke 9 tritt. Zum Balligschleifen wird nun der Antrieb für die Schleifkörper 3 sowie der Antrieb für den Schleifkopf 1 eingeschaltet. Somit drehen sich die Schleifkörper 3 mit grosser Geschwindigkeit um ihre eigenen Achsen 5 sowie gemeinsam mit geringerer Geschwindigkeit um die Drehachse 2. Durch den bereits erwähnten Unterschied der Krümmungsradien 54, 55 der Hüllfläche 6 sowie der Aussenflanke 9 wird gegen beide Enden der Aussenflanken 9 stärker abgeschliffen, wie auch der Vergleich der Längslinien 27a, 35 des Zahnes 28 im Beispiel gemäss Fig. 3 zeigt. Das Zustellen während des Schleifens erfolgt durch geringfügiges Drehen des Zahnrades gegen die Schleifkörper 3.

Analog wird beim Balligschleifen der Innenflanken 10 vorgegangen. Dazu wird ein Schleifkopf 1 gewählt, dessen äussere Hüllfläche 7 einen geringfügig grösseren Krümmungsradius 56 aufweist als der Krümmungsradius 57 der Innenflanke 10. Im übrigen ist das Vorgehen das gleiche wie beim Balligschleifen der Aussenflanken 9.

Wird dagegen beim Einstellen der Drehachse 2 des Schleifkopfes 1 relativ zur Aussenflanke 9 resp. Innenflanke 10 die Drehachse 2 so gestellt, dass sie sich nicht mehr in je gleicher Entfernung von den Enden der Aussenflanken 9 bzw. Innenflanke 10 befindet, so wird an dem Ende der Aussenflanke 9 bzw. Innenflanke 10 stärker abgeschliffen, welches weiter von resp. näher bei der Drehachse 2 liegt. Entsprechend wird am anderen Ende derselben Flanke weniger oder gar nicht abgeschliffen. So lässt sich das Tragbild einer Zahnflanke in deren Längsrichtung verschieben.

Dazu ist weiter zu bemerken, dass zum Balligschleifen der Innen- und Aussenflanken 10, 9 eines Zahnrades meistens derselbe Schleifkopf 1 mit denselben Schleifkörpern 3 verwendet werden kann. Denn um eine hohe Schleifleistung zu erreichen, sollte der Durchmesser der Schleifkörper 3 möglichst gross, aber natürlich etwas kleiner als die Breite der Zahnlücke 8 sein. Die äussere Hüllfläche 7 hat einen Krümmungsradius 56, der grösser ist als der Krümmungsradius 54 der inneren Hüllfläche 6. Da oftmals bei Zahnrädern die Krümmungsradien der Innenflanken 10 wie der Aussenflanken 9 nach dem Schneiden gleich oder nur wenig verschieden sind, ist so beim selben Schleifkopf 1 die Bedingung, wonach zum Balligschleifen der Krümmungsradius 56 der äusseren Hüllfläche 7 grösser sein muss als derjenige 57 der Innenflanke 10 und der Krümmungsradius 54 der inneren Hüllfläche 6 kleiner sein muss als derjenige 55 der Aussenflanke 9, dann erfüllt, wenn der Krümmungsradius 55, 57 der ungeschliffenen Flanken zwischen den Krümmungsradien 54, 56 der beiden Hüllflächen 6, 7 liegt.

Anhand der Figuren 2 und 3 wird erläutert, wie die Innen- und Aussenflanken der Zähne eines Zahnrades, beispielsweise eines Kegelrades 11, mit einem kontinuierlichen Verfahren balliggeschliffen werden. Voraussetzung dazu ist, dass die Zahnlücken bereits nach demselben kontinuierlichen Verfahren geschnitten sind. Auf ein solches Verfahren beziehen wir uns mit der Darstellung gemäss Fig. 2. Dabei sind die Innenflanken der Zähne durch die Schneidkanten 41 des Aussenschneiders 40 des Messerkopfes 37 (gemäss Fig. 4) hergestellt worden. Fig. 2 stellt die Verhältnisse dar, wie sie auf der Teilebene des Planrades 13 auftreten. Somit kämmt das Planrad 13, während es sich in Richtung eines Pfeiles 46 dreht, mit dem sich ebenfalls drehenden Kegelrad 11. Der Messerkopf 37 dreht sich um seine Drehachse 38, welche die Teilebene im Zentrum 18 schneidet, in Richtung eines Pfeiles 47, wodurch die Schneidkante 41 die Zahnlängslinie 15a des Zahnes 14′ des Planrades 13 erzeugt. Messerkopf 37 und Kegelrad 11 drehen sich dabei mit Geschwindigkeiten, die sich ergeben aus dem Abrollen des Rollkreises 20 des Messerkopfes 37 auf dem Grundkreis 19 des Planrades 13, wobei deren Berührung immer im Punkt 49 stattfindet. Da in diesem Beispiel der Radius 45 (Fig. 4) für die beiden Schneidkanten 41, 42 der Innen- und Aussenschneider 39, 40 in der Teilebene 44, die mit der Teilebene (Zeichnungsebene) des Planrades 13 übereinstimmt, gleich sind, haben alle Zahnlängslinien 15a, 27a aller Zähne des Planrades 13 resp. des Kegelrades 11 gen gleichen Krümmungsradius. Dieser entspricht für den Berechnungspunkt 16 dem Abstand 48 zwischen dem Berechnungspunkt 16 und dem Berührungspunkt 49 des Grundkreises 19 mit dem Rollkreis 20. Dem Radius 45 entspricht aber der Abstand 50 zwischen Berechnungspunkt 16 und Zentrum 18. Der Umstand, dass der, dem Radius 45 auf dem Messerkopf 37 entsprechende Abstand 50 in Fig. 2 grösser ist als der momentane Krümmungsradius, entsprechend Abstand 48, ist eine Eigenart dieses kontinuierlichen Herstellungsverfahren und tritt ebenfalls beim Balligschleifen nach diesem Verfahren auf. Dies, weil beim Schneiden resp. Schleifen das Zahnrad und der Messerkopf resp. Schleifkopf je eine Drehbewegung ausführen. Dies ist aber an sich bekannt und soll hier nicht näher erläutert werden.

Zum Balligschleifen der Innenflanke 15′ des Zahnes 14′ wird nun ein Schleifkopf 1 eingesetzt, dessen Krümmungsradius 56 der äusseren Hüllfläche 7, welcher in Fig. 2 einem Abstand 51 zwischen Berechnungspunkt 16 und Drehachse 2 entspricht, grösser ist als der Abstand 50 resp. Radius 45 des Messerkopfes 37. Entsprechend muss die Drehachse 2 des Schleifkopfes 1 im grösseren Abstand 51 von dem Berechnungspunkt 16 der Zahnlängslinie 15a gelagert werden. Daraus ergeben sich auch andere Roll- und Grundkreise 22, 21. Diese berühren sich in einem Punkt 23, der in einem grösseren Abstand 24 vom Berechnungspunkt 16 entfernt ist als der Punkt 49. Daraus ergibt sich ein grösserer Krümmungsradius, entsprechend Abstand 24 für die ballige Längslinie 26 des Zahnes 14'.

Zum Balligschleifen der Aussenflanke 27 (Fig. 3) des Zahnes 28 wird ein Schleifkopf 1 eingesetzt, dessen Krümmungsradius 54 der inneren Hüllfläche 6, welcher in Fig. 3 einem Abstand 52 zwischen Berechnungspunkt 30 und Drehachse 2 des Schleifkopfes 1 entspricht, kleiner ist als der Abstand 50' zwischen Berechnungspunkt 30 und Zentrum 18 resp. Radius 45 des Messerkopfes 37 (Fig. 4). Entsprechend muss die Drehachse 2 des Schleifkopfes 1 im kleineren Abstand 52 vom Berechnungspunkt 30 der Zahnlängslinie 27a gelagert werden. Daraus ergeben sich wiederum andere Roll- und Grundkreise 31, 32. Diese berühren sich in einem Punkt 33, der in einem kleineren Abstand 34 vom Berechnungspunkt 30 entfernt ist als der Punkt 49 (siehe auch Fig. 2). Daraus ergibt sich ein kleinerer Krümmungsradius, entsprechend Abstand 34 für die ballige Längslinie 35 des Zahnes 28.

In diesem Beispiel gemäss Fig. 2 und 3 kann ebenfalls zum Balligschleifen der Innen- wie auch der Aussenflanken 15, 15', 15'', 27 derselbe Schleifkopf 1 verwendet werden. Insbesondere dann, wenn ein Achsabstand 53 (Fig. 1) zwischen der Drehachse 2 des Schleifkopfes 1 und den Achsen 5 der Schleifkörper 3 gleich angenommen wird wie der Radius 45 (Fig. 4) der Schneidkanten 41, 42 auf der Teilebene 44. Der Krümmungsradius 56, 54 (Fig. 1) der äusseren bzw. inneren Hüllfläche 7, 6 ist somit grösser bzw. kleiner als der Radius 45 (Fig. 4) der Schneidkanten 41, 42, mit welchen die Längslinien 15a bzw. 27a (Fig. 2, 3) der Zähne 14, 14', 14'', 28 erzeugt wurden.

Das Zentrum 18 dient bei dem erfindungsgemässen Schleifverfahren als Zentrum für Längslinien nichtballiger Zahnflanken in dem Sinne, als es Krümmungsmittelpunkt wie auch Zentrum einer Bewegung eines Werkzeuges sein kann, welche zusammen mit der allfälligen Bewegung des Zahnoder Planrades eine nichtballige Zahnlängslinie ergibt.

Selbstverständlich beschränkt sich das erfindungsgemässe Schleifverfahren nicht nur auf Zahnräder, welche gemäss einem Einzelteilverfahren oder mittels einem Erzeugungsplanrad hergestellt sind. Auch an Zahnrädern, welche mit einem Erzeugungsgegenrad oder nach einem Fräs- oder Giessverfahren hergestellt sind, lässt sich das erfindungsgemässe Schleifverfahren anwenden. Ebenso können die nach dem erfindungsgemässen Verfahren und mit dem erfindungsgemässen Schleifkopf ballig zu schleifenden Zähne gewälzt werden.

## Ansprüche

1. Verfahren zum Balligschleifen von Zahnrädern mit längsgekrümmten Zähnen nach einem kontinuierlichen Verfahren, mit kegelstumpfförmigen, um ihre Achsen (5) drehbaren, einzeln angetriebenen Schleifkörpern (3), welche in einem um eine Drehachse (2) drehbaren Schleifkopf (1) gelagert sind und beim Schleifen eine äussere sowie eine innere, zur Drehachse (2) des Schleifkopfes (1) koaxiale Hüllfläche (6, 7) bilden, dadurch gekennzeichnet, dass zum schleifen die Achsen (5) der Schleifkörper (3) auf einem einzigen Kreis (5a) mit einem Radius (53) eingestellt und axial festgehalten werden, dass anschliessend die eine Flanke — Aussenflanke oder Innenflanke — der Zahnlücken (8) geschliffen wird und daran anschliessend wiederum die andere Flanke — Innenflanke oder Aussenflanke — der Zahnlücken (8) geschliffen wird.

2. Verfahren gemäss Anspruch 1, dadurch gekennzeichnet, dass vor dem Schleifen der Aussenflanken (9, 27) die Schleifkörper (3) an deren innerer Hüllfläche (6) und vor dem Schleifen der Innenflanken (10, 15') die Schleifkörper (3) an deren äusserer Hüllfläche (7) abgerichtet werden.

3. Schleifkopf zur Durchführung des Verfahrens gemäss Anspruch 1, gekennzeichnet durch eine einzige Gruppe von in axialer Richtung fest gelagerten Schleifkörpern (3), deren Achsen (5) auf einem einzigen Kreis (5a) angeordnet sind.

4. Schleifkopf zur Durchführung des Verfahrens gemäss Anspruch 3, dadurch gekennzeichnet, dass der Radius (53) des Kreises (5a) gleich ist einem Radius (45) von Schneidkanten (41, 42), von Innen- und Aussenschneidern (39, 40) eines Messerkopfes (37), mit welchem das zu schleifende Zahnrad nach einem kontinuierlichen Verfahren hergestellt ist.

## Claims

1. Method of crown grinding Gears having longitudinally curved teeth, in accordance with a continuous method, using truncated cone-shaped individually driven grinding elements (3) rotatable about their lengthwise axes (5), mounted in a grinding head (1) rotatable about an axis of rotation (2) and forming during grinding an outer envelope surface (7) and an inner envelope surface (6) coaxially dispositioned with respect to the axis of rotation (2) of the grinding head (1), characterised in that for grinding, the axes (5) of the grinding elements (3) are arranged on a single circle (5a) with a radius (53) about the axes of rotation (2) and are axially fixed, and in that first one of the tooth flanks — outer tooth flank or inner tooth flank — of a tooth gap (8) is ground and subsequently the other tooth flank — inner tooth flank or outer tooth flank — of the tooth gap (8) is ground.

2. Method according to claim 1, characterised in that the grinding elements (3) are dressed at their inner envelope surface (6) before grinding the outer tooth flanks (9, 27) and that the grinding elements (3) are dressed at their outer envelope surface (7) before grinding the inner tooth flanks (10, 15').

3. Grinding head for performing the method according to Claim 1, characterised by a single group of axially fixed grinding elements (3) whose axes of rotation (5) are arranged upon a single circle.

4. Grinding head according to Claim 3, characterised in that the radius (53) of the circle (5a) corresponds to the radius (45) of inner and outer cutting edges (41, 42) of inner and outer cutters (39, 40) of a cutter head (37) used for manufacturing the gear to be ground according to a continuous cutting technique.

## Revendications

1. Procédé pour rectifier le bombé des roues dentées à dents longitudinalement courbes selon un procédé continu, avec des corps tronconiques de rectification (3) susceptibles de tourner autour de leurs axes (5), et entraînés individuellement, qui sont montés sur une tête de rectification (1) susceptible de tourner autour d'un axe de rotation (2), ces corps de rectification lors de la rectification décrivant une surface enveloppe extérieure ainsi qu'une surface enveloppe intérieure (6, 7) co-axiales à l'axe de rotation (2) de la tête de rectification (1), procédé caractérisé en ce que pour la rectification, les axes (5) des corps de rectification (3) sont mis en place sur une circonférence unique (5a) avec un rayon (53) et sont maintenus axialement, puis l'un des flancs — flanc externe ou flanc interne — des intervalles (8) entre dents est rectifié puis à son tour, l'autre flanc — flanc interne ou flanc externe — des intervalles entre dents (8) est rectifié.

2. Procédé selon la revendication 1, caractérisé en ce que, avant la rectification des flancs externes (9, 27) les corps de rectification (3) sont ajustés sur leurs surfaces enveloppes internes (6) tandis qu'avant la rectification des flancs internes (10, 15') les corps de rectification (3) sont ajustés sur leurs surfaces enveloppes externes (7).

3. Tête de rectification pour la mise en œuvre du procédé selon la revendication 1, tête de rectification caractérisée en ce qu'elle comporte un groupe unique de corps de rectification (3) montés fixes en direction axiale, et dont les axes (5) sont disposés sur une circonférence unique (5a).

4. Tête de rectification selon la revendication 3, caractérisée en ce que le rayon (53) de la circonférence (5a) est égal au rayon (45) des arêtes coupantes (41, 42) de couteaux internes et externes (39, 40) d'une tête de fraisage (37) avec laquelle la roue dentée à rectifier est réalisée selon un procédé continu.

FIG. 1

FIG. 4

FIG. 2

0 022 586

FIG. 3

0 022 586